# EUROPEAN PATENT APPLICATION

(11) **EP 3 372 119 A1**
(43) Date of publication of application: **12.09.2018**
(21) Application number: 17020087.7
(22) Date of filing: 06.03.2017
(51) Int. Cl.: A47C 7/72, G06F 3/01

(54) **ELECTRONIC ANALYTIC, PREDICTIVE AND MULTISENSORY WORKSTATION TO INCREASE CREATIVITY IN WORKSPACES**

(71) Applicant: WOWSYSTEMS INFORMATICA LDA., 9050-446 Funchal (PT)
(72) Inventor: Pereira Faria Campos, Fernando Miguel, 9000-190 Funchal (PT); Pereira Campos, Pedro Filipe, 9000-092 Funchal (PT)

(57) **Abstract**

A workstation and apparatus for analysing and predicting creativity peaks and moods in the context of creative workspaces, by means of an immersive seat which collects and combines data from several sensors in order to detect the user's mood and adjust the sensors to produce the most favourable ambiance using LED lighting and 3D sound.

The immersive workstation has a support seat (1) as well as a table (2), both attached to a a fibre structure in the form of a capsule (3); a Wi-Fi-enabled minicomputer attached to the seat (4); a thermal imaging camera attached to the ceiling of the capsule (5); a strip of LED lights with fiber optics attached to the ceiling of the capsule (6); a rotation sensor attached to the base of the capsule (7); a movement sensor attached to the support seat(8); a pressure sensor attached to the support seat (9); a fingertip sensor attached to the support table (10) and connected to the Wi-Fi-enabled minicomputer (4) and; a 3D directional sound speaker attached to the ceiling of the capsule (11).

The workstation can also adjust the immersive ambiance according to the user's preferences wherein:
the fingertip sensor (10) that is connected to the Wi-Fi-enabled minicomputer (4) that recognizes the current user and, in accordance, adjusts the immersive ambiance by sending inputs to the 3D directional sound speakers (11) and to the strip of LEDs and fibre optics (6) in accordance to user's preferences.

## Description

### BACKGROUND OF THE INVENTION

### Field of the Invention

The present invention relates to an immersive seat with electronic components, and more particularly to a method and apparatus for analysing and predicting creativity peaks and moods, in workspaces.

### Description of Prior Art

The built environment affects our well-being and this in turn influences our effectiveness in the workplace. Poor environments contribute to absenteeism and to people not working as well as they might. The physical workspace refers to the person's context in terms of the physical surroundings, such as the immediate workplace and surrounding buildings. Typical physical environment improvements, that positivity affect employee's creativity include: a non-crowded workspace, the presence of plants, the use of inspiring colors on the walls, a new carpet in the office, more pictures and posters on the walls, windows with outside view, privacy, dim lightning.

At present, however, there has not been any piece of furniture adaptable and adjustable to the user's individual creative mood, as there is also no way to sense the creativity levels of office workers, which is especially relevant for those working in creative industries such as advertising, design, film, fashion and others. High levels of environmental distraction, such as noise or prolonged exposure to crowded environments, are associated with less perceived support for creativity at work.

### SUMMARY OF THE INVENTION

This invention is a workstation unit that can stimulate a creativity-supporting work environment. Accordingly, a primary objective of the present invention is to provide an immersive seat that contains embedded electronic components - sensors and actuators - aimed at modeling and predicting each user's preferred creative mood settings.

Furthermore, people's perceived control over physical environmental conditions seems to be correlated with their productivity.

In order to achieve the objective mentioned above, the present invention provides an apparatus for detecting the user's individual stress levels, and adjusting accordingly the audio and visual sensorial actuators embedded in the workstation.
The workstation's seat comprises a wifi-enabled minicomputer, a thermal imaging camera, strips of LED lights with fiber optics, a rotation sensor, movement sensor, pressure sensor, fingertip sensor and 3D directional sound speakers.
- Technical problem
- Disclosure of the invention (how to solve, advantages and effects of invention)

It is to be understood that both the foregoing general description and the following detailed description are exemplary, and are intended to provide further explanation of the invention as claimed. Other advantages and features of the invention will be apparent from the following description, drawings and claims.

### BRIEF DESCRIPTION OF DRAWING

The features of the invention believed to be novel are set forth with particularity in the appended claims. The invention itself, however, may be best understood by reference to the following detailed description of the invention, which describes exemplary embodiment of the invention, taken in conjunction with the accompanying drawings, in which:
Fig. 1A is a perspective schematic view of the workstation and the physical and electronic apparatus according to the present invention.
Fig. 1B is another perspective schematic view of the workstation showing the same apparatus in a different perspective for clarification purposes.
Fig. 2 is a flowchart of operating the workstation.

### DETAILED DESCRIPTION OF THE INVENTION

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

Reference will now be made to the drawing figures to describe the present invention in detail.

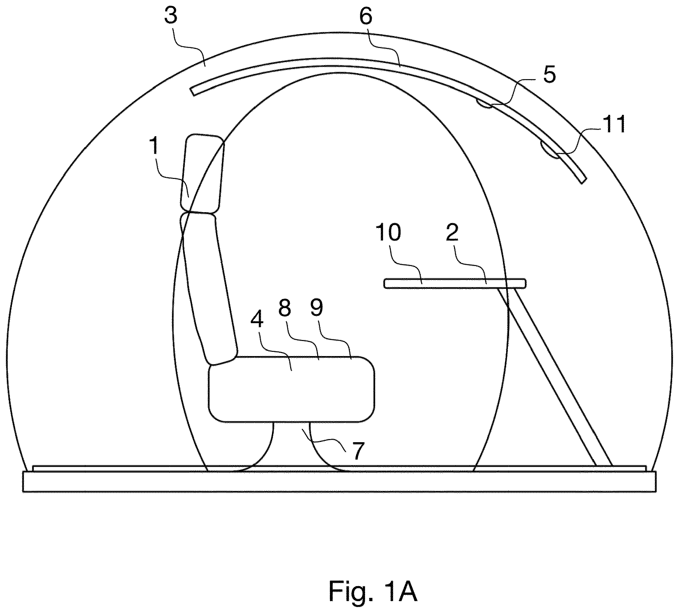

Reference is made to Fig. 1A which is a schematic view of the workstation and the physical and electronic apparatus according to the present invention. The immersive workstation has a support seat (1) as well as a table (2), both attached to a a fibre structure in the form of a capsule (3); a Wi-Fi-enabled minicomputer attached to the seat (4); a thermal imaging camera attached to the ceiling of the capsule (5); a strip of LED lights with fiber optics attached to the ceiling of the capsule (6); a rotation sensor attached to the base of the capsule (7); a movement sensor attached to the support seat(8); a pressure sensor attached to the support seat (9); a fingertip sensor attached to the support table (10) and connected to the Wi-Fi-enabled minicomputer (4) and; a 3D directional sound speaker attached to the ceiling of the capsule (11).

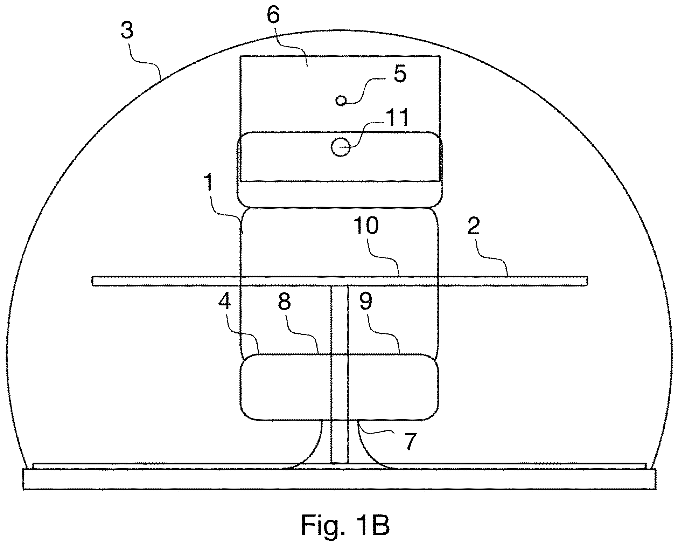

Reference is made to Fig. 1B which shows the same workstation from a different perspective, in order to better illustrate the location of all sensors and actuators which are embedded into the workstation.

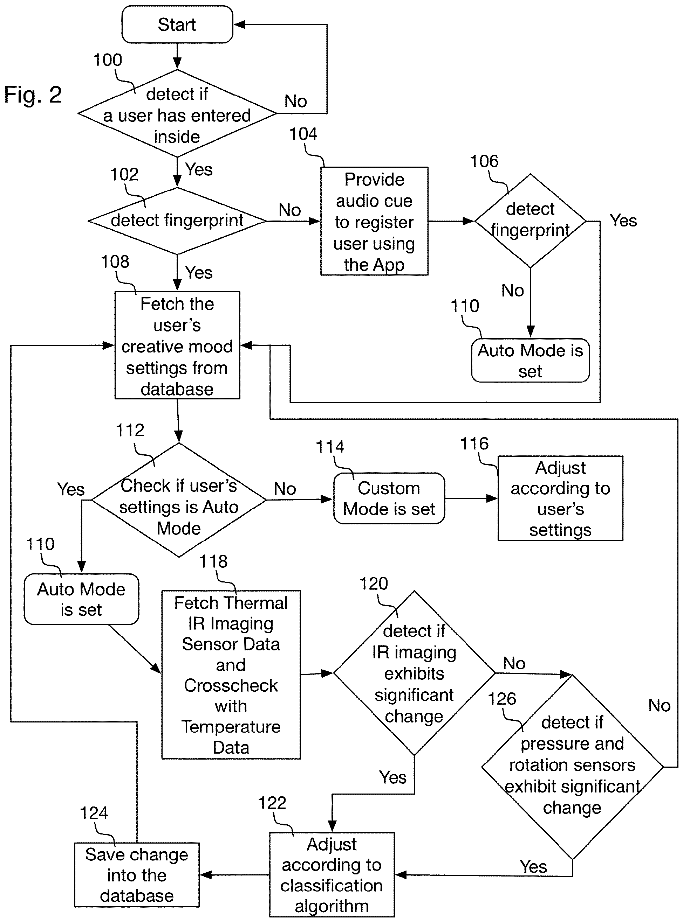

Reference is made to Fig. 2 which is a flowchart illustrating the operation of the workstation in two different contexts: Auto and Custom. Firstly, the apparatus detects whether a user has entered inside the workstation, through the movement sensor attached 8 (100). After this step, the method detects whether the user has provided a fingerprint by pressing the finger into the fingerprint sensor 10 placed on the support table (102). If it doesn't detect a fingerprint, the workstation will provide an audio cue persuading the user to identify himself and/or registering himself in the system through a specific mobile app that is also connected to the workstation's database (104). If the user chooses not to identify himself, the default mode of operation is "Auto", meaning that the workstation will detect stress and mood of the user and will adapt its ambiance automatically (110).
If the user provides a fingerprint (106), the method will fetch the user's personal creative mood preferences from the database (108) and will check if the user prefers to operate in "Auto" mode as opposed to custom settings (112). If the "Auto" mode is set (110), the method will fetch thermal infrared (IR) imaging sensor data and will crosscheck that data with local temperature data to allow a more precise detection of the stress levels (118). This detection is determined by the thermal data from certain features, especially the tip of the nose which is found to be a reliable predictor of stress levels.
Afterwards, the method will detect if thermal IR imaging exhibits significant change over time (120). If it does, then the workstation adjusts the ambiance according to a classification algorithm that is used to model and predict, for a given user, its creative moods and preferred settings (122). The changes are saved into the database (124). If not, the method will detect if pressure and rotation sensors exhibit significant changes (126). If they do, we repeat the adjustment process according to the classification algorithm (122) and save the changes into the database (124), which also helps to improve the classification algorithm. The method will repeat this process by fetching again the creative preferences of the user (108) and proceed according the user's settings (112).
Otherwise, if the "Custom" mode is set (114), the workstation will adjust its ambiance according to the user's settings (116).

## Claims

1. An immersive office seat, comprising:
a support seat (1);
a support table (2);
both attached to a fibre structure in the form of a capsule (3);
a Wi-Fi-enabled minicomputer attached to the seat (4);
a thermal imaging camera attached to the ceiling of the capsule (5);
a strip of LED lights with fiber optics attached to the ceiling of the capsule (6);
a rotation sensor attached to the base of the capsule (7);
a movement sensor attached to the support seat (8);
a pressure sensor attached to the support seat (9);
a fingertip sensor attached to the support table (10) and connected to the wifi-enabled minicomputer (4) and;
a 3D directional sound speaker attached to the ceiling of the capsule (11).

2. A method and apparatus for analysing and predicting creativity peaks and moods, in workspaces, using the immersive seat in accordance with claim 1, by adjusting immersive ambiance to the user's preferences wherein:
the fingertip sensor (10) that is connected to the Wi-Fi-enabled minicomputer (4) that recognizes the current user and, in accordance, adjusts the immersive ambiance by sending inputs to the 3D directional sound speakers (11) and to the strip of LEDs and fibre optics (6) in accordance to user's preferences;

3. A method and apparatus for analysing and predicting creativity peaks and moods, in workspaces, using the immersive seat in accordance with claim 1, by adjusting immersive ambiance in subliminal ways and collecting creativity peaks data wherein:
a rotation sensor attached to the base of the capsule (6)and connected to the Wi-Fi-enabled computer; the movement sensor attached to the support seat (8) connected to the Wi-Fi-enabled computer; the pressure sensor attached to the support seat and connected to the Wi-Fi-enabled computer(4); and a thermal imaging camera attached to the ceiling of the capsule (5) and connected to the Wi-Fi-enabled minicomputer;
collect data regarding the user movements, behavior and stress levels which then is interpreted in a scale of 0-10 in which 0 stands for very relaxed and 10 for very stressed, which translates in inputs sent from the Wi-Fi-enabled computer to adjust the strip of LED lights with fiber optics (6) and to the 3D directional sound speaker (11) in order to increase productivity and creativity levels of the user, all done without automatically and without any user direct input;

4. A method and apparatus for analysing and predicting creativity peaks and moods, in creative workspaces, using the immersive seat in accordance with claim 1, wherein:
the combination of the collected data from the rotation sensor attached to the base of the capsule (7); the movement sensor attached to the support seat (8); the pressure sensor attached to the support seat (9); and the thermal imaging camera attached to the ceiling of the capsule; allows the capture of the behavior of the user, stress levels, empathic levels which all translates and correlates with the times in which the user is being more productive and, therefore, allows the apparatus to pre-analyze the most favorable ambiance - LED lighting (6) and ambiance sound (11) - to either:
a. stimulate creativity;
b. stimulate productivity;
c. stimulate relaxation;
d. improve wellbeing and comfort levels.
There are four multisensory combinations of the workstation's settings: Energize; Relax; Focus; and Rest.
